Europäisches Patentamt

European Patent Office

Office européen des brevets

(11) Publication number: **0 242 861 B1**

# EUROPEAN PATENT SPECIFICATION

(45) Date of publication of patent specification: **14.07.93**    (51) Int. Cl.5: **G11B  5/31**, G11B 5/187

(21) Application number: **87105879.8**

(22) Date of filing: **22.04.87**

(54) **Magnetic head.**

(30) Priority: **23.04.86 JP 92071/86**

(43) Date of publication of application:
**28.10.87 Bulletin  87/44**

(45) Publication of the grant of the patent:
**14.07.93 Bulletin  93/28**

(84) Designated Contracting States:
**DE FR**

(56) References cited:
**EP-A- 0 115 842
DE-A- 2 104 445
FR-A- 2 117 058
FR-A- 2 558 000
US-A- 3 651 278**

**PATENT ABSTRACTS OF JAPAN vol. 8, no.
23 (P-251)(1460) 31 January 1984;& JP-
A-58179925**

**PATENT ABSTRACTS OF JAPAN vol. 10, no.
19 (P-423)(2076) 24 January 1986;& JP-
A-60171610**

**PATENT ABSTRACTS OF JAPAN vol. 10, no.
190 (P-474)(2246) 4 July 1986;& JP-A-6134716**

(73) Proprietor: **HITACHI, LTD.
6, Kanda Surugadai 4-chome
Chiyoda-ku, Tokyo 101(JP)**

(72) Inventor: **Abe, Mitsuo
240-15, Nakamurahara
Odawara-shi(JP)**
Inventor: **Konishi, Katsuo
Arusu Hiyoshi 401
1072-1, Minowacho Kohoku-ku
Yokohama(JP)**
Inventor: **Ohshima,Isao
Shonan Life Town B26-18, 639-2
Endo Fujisawa-shi(JP)**
Inventor: **Kawano, Kanji
Matsuba Haitsu B-103 643-1, Nakadacho
Izumi-ku Yokohama(JP)**
Inventor: **Sasaki, Takumi
Haimu Tomihara 101
1117, Koshibaracho Matsue-shi(JP)**
Inventor: **Zama, Hideo
Yorii Apartment 512, 391-2
Tabiko Katsuta-shi(JP)**

(74) Representative: **Altenburg, Udo, Dipl.-Phys. et al
Patent- und Rechtsanwälte Bardehle-
Pagenberg-Dost-Altenburg-Frohwitter & Part-
ner Postfach 86 06 20
W-8000 München 86 (DE)**

## Description

### BACKGROUND OF THE INVENTION

The present invention relates to a magnetic head, and more particularly to a magnetic head having excellent recording/reproducing characteristics for high coercive force magnetic tapes and high productivity.

In recent years, with the development of high density magnetic recording, magnetic tapes having a high coercive force such as a metallic tape have been employed. Corresponding magnetic heads constructed of core material with a large saturated magnetic flux density, e.g. Sendust, permalloy, or amorphous alloy have been also proposed. However, the magnetic head constructed of only such a core material is inferior in its abrasion or wear-out resistance. Thus, in order to insure the life of the magnetic head against abrasion, the core material is generally held by a substrate having good abrasion resistance.

The substrate used may be magnetic material (e.g. ferrite) or non-magnetic material (e.g. ceramic, glass, etc.). The non-magnetic substrate, however, provides the following advantages as compared to the magnetic substrate as described in JP-A-56-19,514 and JP-A-59-142,716:

1) Since magnetic thin films are used as a core material, abrasive noise (principally due to ferrite) is not present.

2) Many coil windings can be made with the inductance reduced and thus the output per unit inductance is large.

Particularly, the magnetic head in which the core material (or member) of a magnetic thin film is formed in an X-character shape when viewed from the tape abutting side as described in JP-A-59-142,716, becomes effective for narrow track (width) applications as well as in converging the magnetic flux to an operating gap by using non-magnetic substrates shaped like projection.

However, the prior arts as mentioned above encounter the following problems with respect to head performance and the fabrication of the head (assembling accuracy):

In the case of the former prior art (JP-A-56-19,514), i.e. magnetic head in which the core material of the magnetic thin film extending from the front portion to the rear portion is sandwiched by the non-magnetic substrates,

1) The magnetic core rear portion rear from the winding window does not greatly contribute to the recording/reproducing performance, and accordingly, constitutes an unnecessary (or unimportant) portion with an invalid inductance.

2) A defective gap and core exfoliation, due to the magnetic core rear portion, are liable to occur in machining the head. This is particularly considerable when the magnetic core consists of multi-layer thin films.

In the case of the latter prior art (JP-A-59-142,716),

1) The magnetic core rear portion rear from the winding window does not greatly contribute to the recording/reproducing performance, and accordingly, constitutes an unnecessary portion as an inductance.

2) The track alignment in the front portion and also the rear portion during the gap bonding, which is carried out by high accuracy substrate machining, is required.

A magnetic head according to the pre-characterising part of claim 1 is disclosed in DE-A-2104 445

### SUMMARY OF THE INVENTION

An object of the present invention is to obviate the problems of the above prior arts and to provide a magnetic head with improved recording/reproducing performance and with improved machining strength which leads to high production yield and high assembling accuracy.

To attain the above object, in accordance with the present invention, a magnetic core consisting of a magnetic thin film is limitedly formed only around a winding window. More specifically, the magnetic core is formed at the gap formation side of a pair of non-magnetic substrates at least one of which has the winding window and in the range from a tape abutting surface to the end position of the winding window and finally it is formed limitedly only around the winding window.

In accordance with the present invention, the magnetic core (magnetic thin film) constituting the magnetic path of a magnetic head, is limitedly formed only at the winding window portion so that any unnecessary inductance can be excluded, thereby improving the recording/reproducing performance. Further, the machining strength of the magnetic head can be improved, thereby providing a magnetic head which can be easily fabricated and provides a high production yield.

### BRIEF DESCRIPTION OF THE DRAWINGS

Fig. 1 is a perspective view showing one embodiment of the magnetic head according to the present invention;

Figs. 2, 3, 4A and 4B are perspective views showing other embodiments of the magnetic head according to the present invention;

Fig. 5 is an exploded view of the embodiment shown in Figs. 4A and 4B;

Fig. 6 is a perspective view showing a further embodiment of the magnetic head according to the present invention;

Fig. 7 is a schematic view showing the principal magnetic circuit of the present invention;

Figs. 8 to 10 are perspective views of still further embodiments of the magnetic head according to the present invention;

Fig. 11 is a perspective view showing a yet further embodiment of the magnetic head according to the present invention;

Fig. 12 is an exploded view of the gap abutting plane of the magnetic head of Fig. 11;

Figs. 13A to 13F are views showing the fabricating process of the magnetic head of Fig. 11;

Fig. 14 is a plan view showing the state where the magnetic head according to the present invention is attached on a base plate; and

Fig. 15 is a characteristic graph for explaining the operation of the magnetic head according to the present invention.

## DESCRIPTION OF THE PREFERRED EMBODIMENTS

The present invention will be explained in detail with respect to several embodiments.

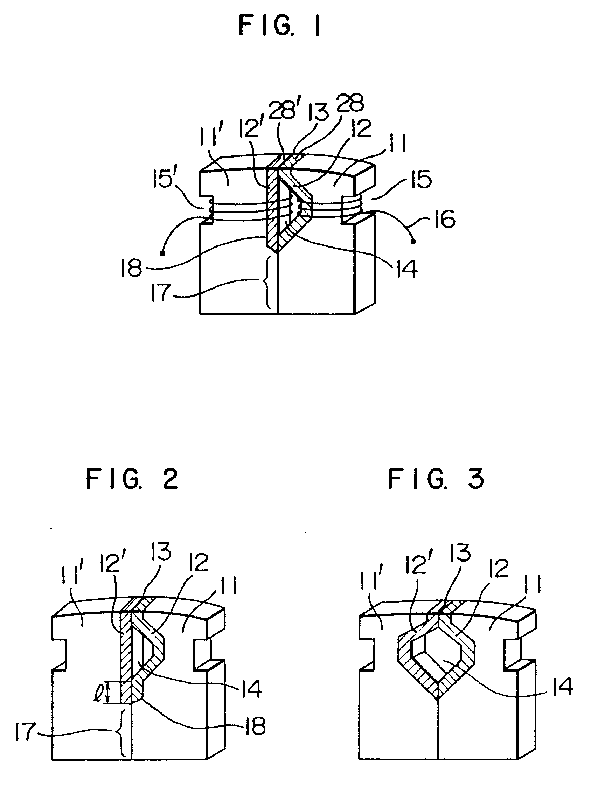

Referring now to Fig. 1, there is shown a magnetic head 10 according to one embodiment of the present invention. In this figure, 11, 11' denote non-magnetic substrates for holding a magnetic core; since the non-magnetic substrates must have a high abrasion resistance, the material having a thermal expansion coefficient proximate to that of the magnetic core material used is selected as a substrate from the group consisting of non-magnetic ferrite, ceramic, hard glass, etc. 12, 12' denote magnetic thin films constituting a magnetic core which is, as shown, formed on the opposite surfaces of the non-magnetic substrates 11, 11' and extending from a winding window 14 to a tape abutting surface; the core is formed of Sendust, permalloy, or amorphous alloy (including Co as a main component) which provides substantially zero magnetostriction, and is fabricated using the technique of sputtering, vacuum evaporation or the like. 13 shows an operation gap which may be formed by bonding a spacer between the magnetic thin films 12 and 12' by means of low melting point glass. The spacer is a film of $SiO_2$, $ZrO_2$, Cr, etc. formed through e.g. sputtering. The coil winding window 14 is formed by providing a groove having e.g. a generally V-shape in at least one of a pair of the non-magnetic substrates 11, 11'. The one magnetic thin film having the thus formed coil winding window 14 is referred to as a C core while the other magnetic thin film is referred to as an I core. 15, 15' are coil winding grooves which are formed on the outer surfaces of the non-magnetic substrates 11, 11'. Winding coils 16 are wound on the grooves. In this connection, although in the figure, the magnetic head having a uniform thickness is illustrated, there may be adopted a stepped structure having a predetermined track width at the tape abutting portion and a width greater than the track width at the rear portion. This applies to the other embodiments shown in Figs. 2 to 13F which will be explained later.

The shape of the magnetic path formed in this embodiment will be explained. The thickness of the cores 12, 12' formed of the magnetic thin film is decided in accordance with a desired track width. For example, if the track width is 20 $\mu$m, the film thickness of the cores is 20 $\mu$m or more, preferably 30 - 40 $\mu$m. In order to assure necessary turns of the windings (about 20 turns) the shape of the winding window 14 is a V-shape groove having a depth of 0.2 - 0.3 mm and an angle of 30 - 60° formed by two slopes. The V-shape groove has a flat portion 0 - 0.3 mm long in its bottom, which can be omitted in the case of less turns of the windings. The cores (magnetic thin films) 12, 12' are limitedly formed in the periphery of the window 14 but not formed at the portion 17 rear from the window. More specifically, the cores are formed on the part extending from the inner wall of the window 14 in the C core 11 to the tape abutting surface and also on the part extending from the surface in the I core opposite to the window to the tape abutting surface. Thus, the magnetic path in this embodiment is formed with a substantially uniform thickness in the periphery of the winding window. In order to construct such a magnetic path, a step displacement 18 corresponding to the core film thickness as well as the V-shape groove for the winding window 14 is provided on the gap formation surface of the non-magnetic substrates 11, 11'. Further, if the boundaries 28, 28' between the non-magnetic substrates 11, 11' and the cores (magnetic thin films) 12, 12' on the tape abutting surface are parallel to the operation gap 13, an undesired contour effect (e.g., pseudogap effect) occurs. To obviate this effect, the opposite surfaces of the non-magnetic substrates 11, 11' are not made parallel, e.g. are made uneven.

Fig. 2 shows one modification of the embodiment of Fig. 1. In Fig. 2, the winding coil is not illustrated for simplicity of illustration as in Figs. 3 et seg. In Fig. 2, the basic structure of which is the same as that of Fig. 1, the bonding length at the rear portions of the cores (magnetic thin film) 12, 12' is made somewhat greater. More specifically, the C core 11 is provided with a step displacement portion 18 having a distance $\ell$, the depth of which corresponds to the core film thickness at the end portion of the winding window 14, while the I core 11' is provided with the core (magnetic thin film) 12' extended by a distance $\ell$; the ends of the cores (magnetic thin films) 12 and 12' are made to coincide with each other.

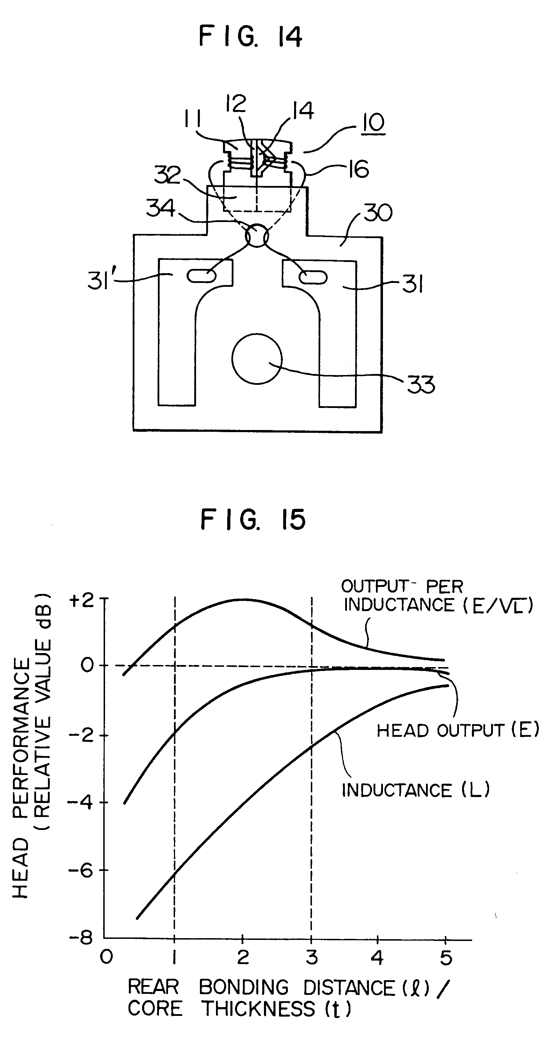

The effect in the head performance in the embodiments of Figs. 1 and 2 will be explained with reference to Fig. 15. Fig. 15 is a graph showing the experimental data of the head performance vs. the bonding distance $\ell$ at the core rear portion. Assuming that the core thickness is t, the inductance L decreases with decreasing $\ell/t$ and is -6 dB as compared to the conventional structure in the vicinity of $\ell/t = 1$. This is due to the removed portion of unnecessary inductance and also to the increase of the magnetic resistance of the rear bonding portion associated with the shortening the magnetic core rear portion. The head output E also decreases slowly and is -2 dB in the vicinity of $\ell/t = 1$. This is due to the reduction of the reproduction efficiency associated with the increase of the magnetic resistance of the rear junction portion. Thus, the relative output $E/\sqrt{L}$ per unit inductance is improved by +1 dB or more in the range of $\ell/t = 1 - 3$, particularly a peak value +2 dB in the vicinity of $\ell/t = 2$. This tendency applies to the range of the core thickness $t = 10 - 50$ $\mu$m. Accordingly, it will be understood that the condition of maximizing the relative output $E/\sqrt{L}$ per unit inductance is to set the rear junction distance to a value 1 - 3 times of the core thickness t, and that the provision of the step displacement portion 18 at the end of the winding window 14, as necessary, is effective. Incidentally, the end positions of the cores (magnetic thin films) 12, 12' are desired to coincide with each other. However they may not coincide due to poor machining accuracy as the case may be. In this case also, if the overlapping distance $\ell$ meets the above condition, substantially the same effect is obtained.

The advantages obtainable in connection with the fabrication of the embodiments of Figs. 1 and 2 will be explained. In fabricating the magnetic head as shown in Figs. 1 and 2, generally required is a step of, after having deposited the cores (magnetic thin films) 12, 12' on the non-magnetic substrates 11, 11', removing the unnecessary portions of the cores by means of grinding. If the cores (magnetic thin films) are insufficiently adhered to the substrates, or if each core is a multi-layer with relatively weak material intervened among the layers, in this grinding step the cores may exfoliate. As in this embodiment, the structure in which the cores are embedded in the concave portion of the step displacement portion 18 provides a strong protector against the above exfoliate. Further, in the conventional structure, the gap bonded is also likely to exfoliate in the chip cutting step, etc. since almost all the surfaces facing each other are cores (magnetic thin films) so that the kind of bonding glass is difficult to select considering the affinity with the core, thus providing the insufficient bonding strength. On the other hand, in the structure of this embodiment, the non-magnetic substrates in a good affinity with the bonding glass are facing each other at a large fraction of the rear junction part so that strong gap bonding can be easily realized by means of the conventional techniques of melted glass adhesion, melted glass filling (or mounting), etc. Thus, the magnetic head according to the embodiments of Figs. 1 and 2 provides meritorious effects of improving the head performance and machining workability.

Fig. 3 is a perspective view showing another embodiment of the present invention. This embodiment is in a shape of so-called C core - C core bonding in which a winding window 14 is provided in both substrates 11, 11'. This C core - C core bonding provides the following effects as compared with the C core - I core bonding. One is that the length of the periphery of the winding window for a winding space, i.e. the length of a magnetic path can be minimized, thereby lowering the core magnetic resistance. The other is that the winding window 14 is shared by both the cores so that with the winding space fixed, the depth of the window can be made smaller, i.e. the slopes of the window can be made gentle. The magnetic characteristic (permeability) of the cores (magnetic thin films) depends on the angle of the slopes, and the gentler the slopes are, the more improved the characteristic is, i.e. the lower the magnetic resistance of the cores is. Thus, the C core - C core bonding structure is more exellent than the C core - I core bonding structure in their reproduction efficiency.

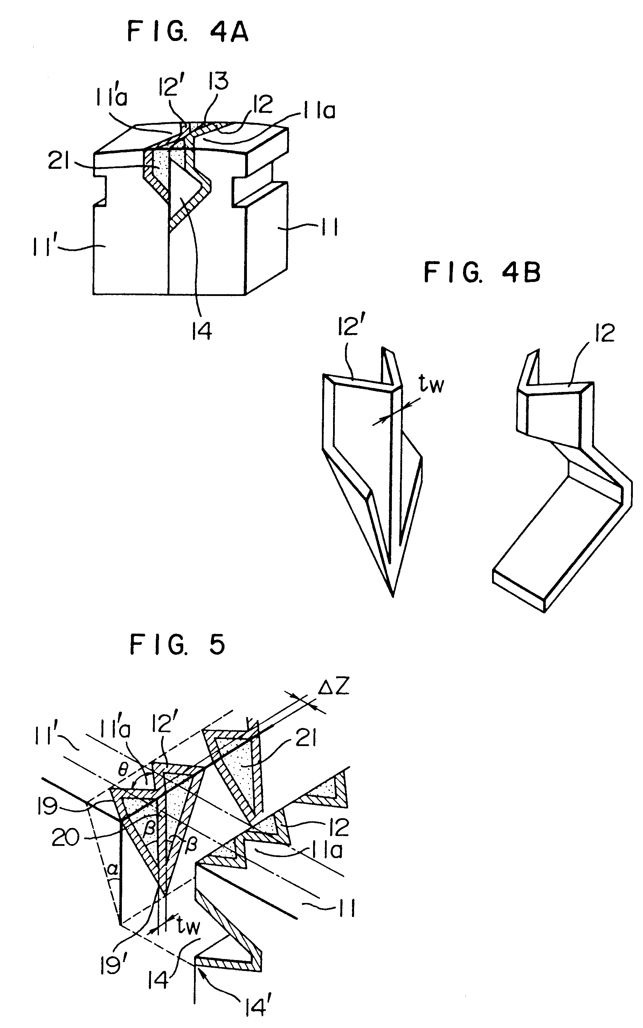

Figs. 4A and 4B show still another embodiment of the present invention. This embodiment is preferably used when the track width is small relatively to the head width. As seen from Figs. 4A and 4B, opposite projections 11a, 11'a each having a general V-shape are provided on the opposite surfaces of the non-magnetic substrates at the tape abutting side of the winding window, and the magnetic cores of the magnetic thin films 12, 12' are formed on the peripheries of the projections. The detailed structure of this embodiment will be explained with reference to Fig. 5.

Fig. 5 shows the state of the structure prior to gap bonding. A W-shape grooves 19 are provided in the gap formation surfaces of the non-magnetic substrates 11, 11'. The end 19' of the W-shape grooves is made to coincide with the end 14' of the winding window. The ridge 20 defining the head track width, of the W-shape groove apex, is made in the same shape along the direction of the head depth. Therefore, in machining the W-shape groove, the rotation of angles $\alpha (= 10 - 20°)$ and $\beta$-

(= 10 - 20°) are introduced. More specifically, the head track width $t_W$ is given by the width of the ridge 20 of the magnetic cores made of the magnetic thin films 12, 12' formed on the center projections 11a, 11'a of the W-shape grooves 19. To provide the track width $t_W$ of a predetermined value, the height of the W-shape groove center projection is set such that the distance between the center projection apex and the gap bonding surface is a predetermined distance $\Delta Z$, and to provide the same track width $t_W$ along the head depth direction, the distance $\Delta Z$ must be maintained at any point along the head depth direction. One effective way of forming such a W-shape groove is to form two adjoining V-shape grooves, the V-shape grooves being such that the depths thereof become shallower and the ends thereof meet. To realize this, the V-shape grooves are provided such that the bottom of the V-shape groove is angled the elevation angle $\alpha$ with respect to the substrate surface and is rotated by the in-plane rotational angle $\pm\beta$. On the other hand, although the apex angle $\theta$ is set in the range of 40 - 120°, the optimum angle is 60 - 90° considering the crosstalk from an adjacent track and the magnetic characteristic of the core. 21 is a non-magnetic protector which protects the core 12, 12' and fills up the W-shape grooves. This non-magnetic protector is formed by sputtering or vacuum evaporating ceramic material having a high abrasion resistance, e.g. $SiO_2$, $Al_2O_3$, forsterite, etc. After the gap bonding, as shown with dot-chain lines in Fig. 2, a predetermined thickness is cut out to provide a magnetic head in which the cores (magnetic thin films) 12, 12' constitute an X-shape on the tape abutting surface. In this embodiment also the magnetic path of the cores (magnetic thin films) 12, 12' is formed only on the inner wall of or only around the winding window 14 so that the same effect as in the previous embodiments can be obtained. Since the magnetic thin film extends in the head width direction along the entire length of the C core rear end portion, the magnetic contact between the C core rear end portion and the I core rear portion during the gap bonding is assured for some possible variation in the width direction. Further, since the magnetic path is converged toward the operation gap 13 from two directions to provide an X-shape, the recording/reproducing efficiency of the magnetic head can be advantageously improved. Further, by using the modifications of the magnetic path as shown in Figs. 2 and 3, the head performance can be further improved for the reason mentioned above.

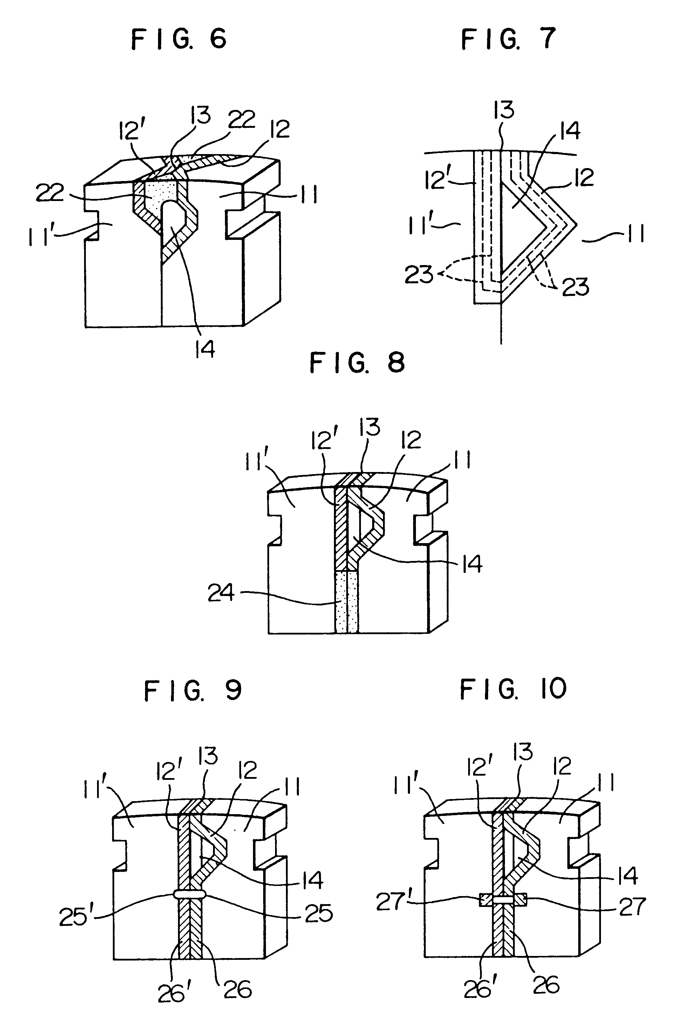

Fig. 6 shows a perspective view of one application of the embodiment of Figs. 4A and 4B, in which the non-magnetic protector (Fig. 4A) is made of low melting glass material fused and filled in the W-shape groove. This application can advantageously simplify the fabrication process since the protector can be also employed as a bonding agent.

Fig. 7 is a view for explaining the operation and effect of the magnetic head when the core (or magnetic thin film) is formed of a multi-layer film. The magnetic thin film is of a multi-layer structure including insulator films of e.g. $SiO_2$ in order to prevent the permeability from being reduced in a high frequency range due to eddy current loss. For example, the appropriate thickness per one layer is 5 - 10 $\mu$m for a video band (6 MHz). The inter-layer insulating films indicated by dotted lines 23 in the figure are 0.01 - 0.2 $\mu$m. Because of the nature of the magnetic circuits, the inter layer insulating film 23, when traversed by a magnetic path, may increase the magnetic resistance, in dependence on the thickness, thus affecting the head performance. This is particularly remarkable when the junction distance at the rear portion is shortened as in this invention. However, in this invention, as shown in the figure, the direction of the inter-layer film 23 substantially is in the direction of the magnetic flux flow so that any magnetic flux does not traverse the inter layer insulating film 23. Thus, the magnetic path shape according to this invention provide the advantageous effect in the magnetic head performance particularly when it is of a multi-layer structure.

Fig. 8 is a perspective view of another embodiment of this invention. In this embodiment, another non-magnetic film 24 is placed at the place where the gap is formed at the rear portion. The non-magnetic film 24, when it has the same thickness as the cores (magnetic thin films) 12, 12', makes it unnecessary to form step displacements for the non-magnetic substrates 11, 11'. The non-magnetic film 24, which may be made of metal material as well as of insulating material such as $SiO_2$, glass, ceramic, etc., can be very precisely formed in its thickness using technique of sputtering, vacuum evaporation or the like. This assures the junction at the rear portion as compared with the case where the step displacement is formed by machining.

Fig. 9 shows a modified structure of another embodiment of this invention. In this modification, grooves 25, 25' are provided at a predetermined position by machining or the like to separate the magnetic thin films from each other. Since the separated magnetic thin films 26 and 26' are completely separated from a main magnetic path constituted by the magnetic thin films at the side of the winding window 14 so that they do not entirely influence the head performance. The grooves 25 and 25' may have a depth enough to reach the magnetic thin films 12, 12' and the substantially the same thickness as the magnetic thin films 12, 12'. The structure of Fig. 9 makes it unnecessary to form the step displacement, which must be precisely formed in the embodiments of Figs. 1 to 8, thereby advantageously simplifying the fabrication process.

Fig. 10 is still another modified structure of the embodiment of Fig. 8. In this structure, the magnetic thin films 12, 12' are provided on the grooves 27 and 27' which are previously provided at a predetermined position of the non-magnetic substrate 11 and 11'. If the groove 27 and 27' have a depth greater than (preferably, more than twice as great as) that of the magnetic thin films 12, 12', and are shaped such that the sides of the grooves are substantially perpendicular to the direction of the surfaces facing each other of the substrates 11, 11', the magnetic thin film is substantially not deposited on the side faces, (even if deposited, its magnetic property is poor). Thus, the rear magnetic thin films 26, 26' are effectively separated from the magnetic path so that they do not influence the head performance. The structure of Fig. 10 makes it unnecessary to form the step displacement for the non-magnetic substrates 11, 11', thereby simplifying the fabrication process.

The modifications of the head structure as shown in Figs. 7 to 10 can be applied to the structure of Figs. 3 to 6 in entirely the same manner.

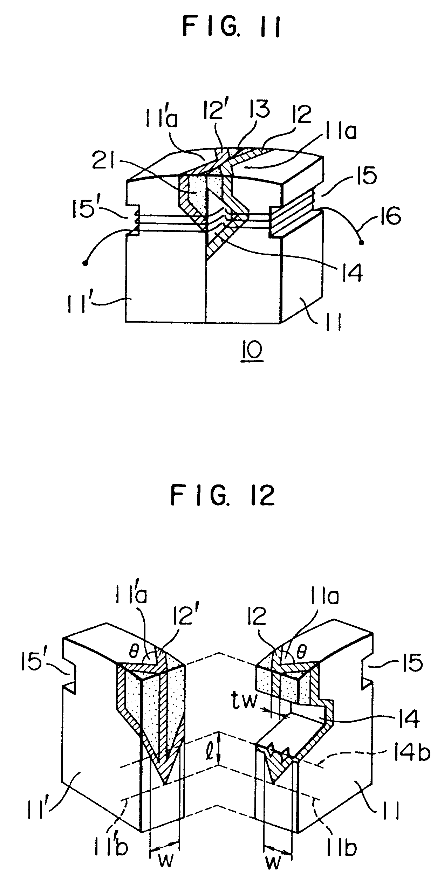

Fig. 11 is a perspective view of a magnetic head according to still another embodiment of this invention. Fig. 12 is a perspective view of this magnetic head exploded at the gap junction face. In this embodiment, the magnetic cores formed of magnetic thin films are confined to a necessary and minimum magnetic path and also the bonding area of the magnetic core rear portions are extended in both of the head-width direction and the head-depth direction. More specifically, W-shape grooves, which become gradually shallow from the front portion towards the rear portion, are machined at the respective gap junction side of a pair of the non-magnetic substrates such that the end of the grooves exceeds the end of the winding window. Thus, the magnetic cores are limitedly formed on the window, and the bonding face or surface at the magnetic core rear portion has the shape which tapers from the front portion towards the rear portion, e.g. arrow tip shape, inverted triangle shape or the like.

Referring now to Fig. 11, the construction of a magnetic head 10 will be explained in detail. In Fig. 11, 11, 11' are a pair of non-magnetic substrates for holding cores. They may be made of non-magnetic Ferrite, ceramic, hard glass, etc. which have excellent abrasion-resistance; the material having a thermal expansion coefficient close to that of the core material is actually selected from the group consisting of these materials. These non-magnetic substrates 11, 11' are shaped to provide, at their gap bonding face side, inverted V-projections 11a and 11'a which are extended to the rear positions 11b, 11'b, and thereafter shaped to provide flat planes. 12, 12' are magnetic thin films serving as magnetic cores, which are made of e.g. Sendust, permalloy, or amorphous alloy (mainly containing Co). The magnetic thin films which have the composition of substantially zero magnetostriction, are fabricated using the technique of sputtering, vacuum evaporation or the like. 13 is an operation gap which may be formed by bonding a spacer between the magnetic thin films 12 and 12' by means of low melting point glass (the spacer is a film of $SiO_2$, $ZrO_2$, Cr or the like formed through e.g. sputtering). 21 is a non-magnetic protector which protects the cores (magnetic thin films) 12, 12' and fills the space defined by the projections. This protector 21 fabricated by sputtering or vacuum-evaporating ceramic material having good abrasion-resistance, e.g. $SiO_2$, $Al_2O_3$, forsterite, etc. This protector 21 may be fabricated by melting low-melting point glass and filling the above groove. 14 is a window for coil windings, which is a generally V-shape groove provided at at least one of the pair of non-magnetic substrates. 15, 15' are grooves for windings where winding coils 16 are wound.

The shape of the magnetic path formed in the magnetic head according to this embodiment will be explained. The apex of each of the inverted V-projections of the non-magnetic substrates is formed to provide an apex angle of 40 - 120°; the optimal angle thereof is 60 - 90° in view of the crosstalk from adjacent tracks and the magnetic property on the slants of the projections. The thickness of the cores (magnetic thin films) 12, 12', which is decided in accordance with a desired track width, is more than 20 $\mu$m for the track width of 20 $\mu$m thick, and is preferably 30 - 40 $\mu$m. The winding window 14 is a V-shape groove with its depth of 0.2 - 0.3 mm and two slants forming an angle of 30 - 60°. The cores (magnetic thin films) 12, 12' are limitedly formed on the inside of the winding window 14 and the area of the I core opposite thereto, the bonding distance $\ell$ at the rear portion is made one to several times as long as the thickness of the cores (magnetic thin films) 12, 12'. The core shape at the bonding face is tapered. In order to constitute the magnetic path mentioned above, a W-shape groove converging from the front side towards the rear portion on the gap formation face of the non-magnetic substrates is provided the apex of which is lowered by a predetermined value from the surface of the non-magnetic substrates. The depth of the W-shape groove is made gradually shallow towards the rear portion to terminate at a position 11b apart from the rear end position 14b of the winding window 14 by a distance $\ell$. Both opposite cores have the W-shape grooves having the same shape and provided at the same position so that the tips of the rear bonding portions coincide with each other in gap-bonding. Incidentally, although in this embodiment, the rear bonding faces of both the C-core and I-core are tapered, at least the rear bonding face of the I core has only to be tapered. In this embodiment also, as in the previous embodiment, the output $E/\sqrt{L}$ for inductance can be enhanced by 1 - 2 dB, in the range of $\ell/t = 1 - 3$, as compared with the prior art magnetic head. In this way, the recording/reproducing characteristics of the magnetic head can be improved by shortening the rear bonding distance of the magnetic core.

Further, as seen from Fig. 12, by tapering the rear bonding portion of the magnetic head, the width of the bonding face is made several times as long as the track width $t_W$. This allows the bonding face to be greatly slipped, thereby improving the assembling accuracy. Thus, the W-shape groove can be easily machined with high precision, the head performance can be also stabilized.

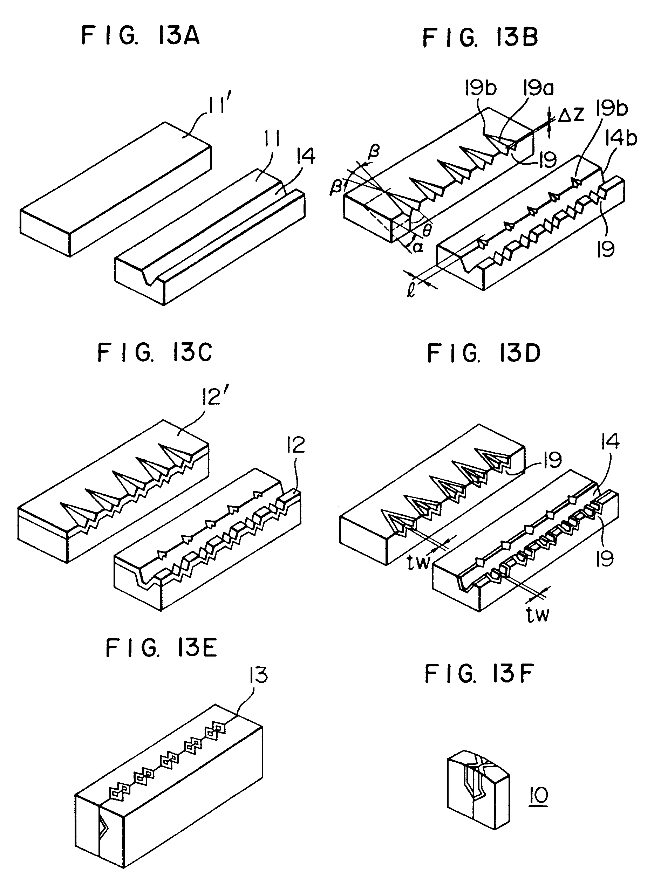

Figs. 13A to 13F are perspective views showing the fabrication process of the magnetic head according to this invention. Respective steps of the fabrication process will be explained below.

First, as seen from Fig. 13A, the winding window 14 is cut out in at least one of a pair of non-magnetic substrates 11 and 11'.

As seen from Fig. 13B, the W-shape groove 19, the depth of which becomes gradually shallow from the front side of the head towards the rear side thereof, is cut out. Then, the ridge of a central projection of the W-shape groove must be made to provide a predetermined height lowered from the substrate surface by a predetermined distance $\Delta Z$ (0 - 50 $\mu$m). The cutting can be made by rotating the substrates by the angle $\alpha$ of elevation of the substrate surface, and the in-plane retation angle $\pm \beta$. For example, if the apex angle of the projection of the W-shape proove $\beta = 60°$, $\alpha$ and $\beta$ may be set to 15° and 8.9°, respectively. The W-shape groove is terminated at the position 19b apart from the end 14b of the winding window by a distance $\ell$. $\ell$ is preferably one to three times as long as the thickness of the cores (magnetic thin films).

As seen from Fig. 13C, the magnetic thin films 12, 12' are deposited on the non-magnetic substrate surfaces with the winding window and W-shape grooves cut out. The thickness thereof is decided in accordance with the track width. For example, the film thickness of approximately 40 $\mu$m is appropriate for the track width of 20 $\mu$m. Thereafter, non-magnetic protectors (not shown) are deposited.

As seen from Fig. 13D, the gap bonding face sides of the substrates are lapped so that the magnetic thin films on the projections of the W-shape grooves have a predetermined track width $t_W$. Thus, the magnetic thin films on the substrate surfaces are entirely removed except the magnetic thin films deposited within the winding window 14 and on the slants of the W-shape grooves 19.

As seen from Fig. 13E, the substrate surfaces (gap bonding faces) are bonded, intervening a non-magnetic spacer of e.g. $SiO_2$ deposited through sputtering, using low melting point glass. Thus, an operation gap 13 is formed.

Finally, the resultant structure is cut into several chips. Round grinding of the tape sliding surface is carried out and coil windings are provided. Thus, a magnetic head 10 is completed.

Among the above steps, in the step as shown in Fig. 13B, the W-shape grooves having the same shape are cut for both non-magnetic substrates 11 and 11' so that in the bonding step as shown in Fig. 13E, track alignment at only the front portion can automatically assure the core mating at the rear portion.

Fig. 14 shows a structure in which the magnetic head 10 according to this invention is attached to a base plate 30. The magnetic head 10 may be any one of the embodiments shown in Figs. 1 to 12. The base plate 30, made of metal such as brass and holding the magnetic head 10, is attached onto a rotary cylinder, etc. through a hole 33 by means of bolts. Terminal plate 31 and 31' are connected with the coil windings 16 through a hole 34. The magnetic head 10 and the base plate 30 are normally bonded using organic bonding agent. And the rear portion of the magnetic head 10 is used as a bonding face so that the core (magnetic thin film) 12 constituting a main magnetic path is not located on the bonding face (where the magnetic head shown in Figs. 9 and 10 is used, an unnecessary part of the core (magnetic thin film) 12 is located on the bonding face 32 but the core portion constituting a main magnetic path is not located there). In such a magnetic head structure, the part used for the main magnetic path and coil windings and the part used for bonding with the base plate 30 can be provided to have suitable shapes, respectively, and the chip surface of the magnetic head 10 can be very effectively used. Further, the core (magnetic thin film) 12 is not in contact with the base plate 30, so that complete electrical insulation therebetween can be made. Therefore, even if the coil windings 16 are partially in contact with the core (magnetic thin film) 12 due to poor insulation coating, the signal current does not leak out through the base plate 30, thereby enhancing the reliability of the magnetic head.

## Claims

1. A magnetic head (10) comprising:
   a pair of non-magnetic substrates (11, 11') at least one of which has a winding window; and a pair of magnetic cores (12, 12') of a pair of magnetic thin films including a front bonding part and rear bonding part, said cores being provided on the opposite surfaces of said pair of non-magnetic substrates, said front bonding part constituting an operating gap (13),
   **characterized in that**
   said magnetic cores are formed on limited areas of said opposite surfaces such that said magnetic cores are formed substantially only on the inner periphery of said window, constituting a magnetic circuit around said window.

2. A magnetic head according to Claim 1, wherein the bonding distance at the rear bonding part of said magnetic cores is set to one to three times as long as the thickness of said magnetic cores.

3. A magnetic head according to claim 1 or 2, wherein at least that one (11') of said non-magnetic substrates that has no winding window has a step displacement (18) in which one (12') of said magnetic cores is embedded.

4. A magnetic head according to any of the preceding Claims, wherein winding windows are provided in both non-magnetic substrates (11, 11').

5. A magnetic head according to any of the preceding Claims, wherein generally V-shape projections (11a, 11'a) are formed on an area extending from said winding window to a tape sliding face add on the opposite surfaces of said pair of non-magnetic substrates, and said magnetic cores covering said projections are made opposite to each other to form said operation gap.

6. A magnetic head according to any of the preceding Claims, wherein each of said magnetic cores is a multi-layer film.

7. A magnetic head according to any of the preceding Claims, wherein the rear part of at least one of said magnetic cores is tapered.

8. A magnetic head according to any of the preceding Claims, wherein said rear parts of said non-magnetic substrates are attached to a base plate (30) for holding said magnetic head.

## Patentansprüche

1. Magnetkopf (10), der aufweist:
   ein Paar nicht-magnetischer Substrate (11, 11') wobei zumindest einer von ihnen ein Wicklungsfenster hat; und
   ein Paar Magnetkerne (12, 12') aus einem Paar dünner Magnetfilme, die einen vorderen Verbindungsteil und einen hinteren Verbindungsteil aufweisen, wobei die Kerne bereitgestellt sind auf gegenüberliegenden Oberflächen des Paares nicht-magnetischer Substrate, wobei der vordere Verbindungsteil einen Betriebsspalt (13) bildet,
   **dadurch gekennzeichnet**, daß
   die Magnetkerne auf begrenzten Bereichen der gegenüberliegenden Oberflächen gebildet sind, derart, daß die Magnetkerne im wesentlichen nur auf der inneren Umgebung des Fensters gebildet sind, wobei sie einen Magnetkreis um das Fenster bilden.

2. Magnetkopf gemäß Anspruch 1, worin der Verbindungsabstand an dem hinteren Verbindungsteil der Magnetkerne festgelegt ist zu einbis dreilach so lang wie die Dicke der Magnetkerne.

3. Magnetkopf gemäß Anspruch 1 oder 2, worin zumindest das eine (11') der nicht-magnetischen Substrate, daß kein Wicklungsfenster hat, eine Schrittverschiebung (18) hat, in der einer (12') der Magnetkerne eingebettet ist.

4. Magnetkopf gemäß einem der vorhergehenden Ansprüche, worin die Wicklungsfenster bereitgestellt sind in beiden nicht-magnetischen Substraten (11, 11').

5. Magnetkopf gemäß einem der vorhergehenden Ansprüche, worin allgemein V-förmige Vorsprünge (11, 11'a) gebildet sind auf einem Bereich, der sich von dem Wicklungsfenster zu einer Bandgleitfläche erstreckt und an den gegenüberliegenden Oberflächen des Paares nicht-magnetischer Substrate, und wobei die Magnetkerne, die die Vorsprünge überdecken, gegenüberliegend zueinander gemacht sind, um den Betriebsspalt zu bilden.

6. Magnetkopf gemäß einem der vorhergehenden Ansprüche, worin jeder der Magnetkerne ein Vielfachschichtfilm ist.

7. Magnetkopf gemäß einem der vorhergehenden Ansprüche, worin der hintere Teil von zumindest einem der Magnetkerne verjüngt ist.

**8.** Magnetkopf gemäß einem der vorhergehenden Ansprüche, worin die hinteren Teile der nichtmagnetischen Substrate an einer Basisplatte (30) angebracht sind zum Halten des Magnetkopfes.

**Revendications**

**1.** Tête magnétique (10) comprenant
un couple de substrats amagnétiques (11, 11') dont l'un au moins possède une fenêtre d'enroulement; et
un couple de noyaux magnétiques (12, 12') d'un couple de pellicules magnétiques minces comprenant une partie de liaison avant et une partie de liaison arrière, lesdits noyaux étant prévus sur les surfaces opposées dudit couple de substrats amagnétiques, ladite partie de liaison avant constituant un entrefer de fonctionnement (13),
caractérisée en ce que
lesdits noyaux magnétiques sont formés dans des zones limitées desdites surfaces opposées de telle sorte que lesdits noyaux magnétiques sont formés sensiblement uniquement sur la périphérie intérieure de ladite fenêtre, en formant un circuit magnétique autour de ladite fenêtre.

**2.** Tête magnétique selon la revendication 1, dans laquelle la distance de liaison au niveau de la partie de liaison arrière desdits noyaux magnétiques est réglée entre une et trois fois l'épaisseur desdits noyaux magnétiques.

**3.** Tête magnétique selon la revendication 1 ou 2, dans laquelle au moins celui (11') desdits substrats amagnétiques, qui ne comporte aucune fenêtre d'enroulement, possède un décrochement étagé (18), dans lequel l'un (12') desdits noyaux magnétiques est enchâssé.

**4.** Tête magnétique selon l'une quelconque des revendications précédentes, dans laquelle des fenêtres d'enroulement sont prévues dans les deux substrats amagnétiques (11, 11').

**5.** Tête magnétique selon l'une quelconque des revendications précédentes, dans laquelle des parties saillantes en forme générale de V (11a, 11'a) sont formées sur une zone qui s'étend depuis ladite fenêtre d'enroulement jusqu'à une face de glissement de la bande et sur les surfaces opposées dudit couple de substrats amagnétiques, et lesdits noyaux magnétiques recouvrant lesdites parties saillantes sont disposés en vis-à-vis l'un de l'autre de manière à former ledit entrefer de fonctionnement.

**6.** Tête magnétique selon l'une quelconque des revendications précédentes, dans laquelle chacun desdits noyaux magnétiques est une pellicule à couches multiples.

**7.** Tête magnétique selon l'une quelconque des revendications précédentes, dans laquelle la partie arrière d'au moins l'un desdits noyaux magnétiques est rétrécie.

**8.** Tête magnétique selon l'une quelconque des revendications précédentes, dans laquelle lesdites parties arrière desdits substrats amagnétiques sont fixées à une plaque de base (30) servant à retenir ladite tête magnétique.

FIG. 1

FIG. 2

FIG. 3

EP 0 242 861 B1

# FIG. 4A

# FIG. 4B

# FIG. 5

12

FIG. 6

FIG. 7

FIG. 8

FIG. 9

FIG. 10

# F I G. 11

# F I G. 12

FIG. 13A

FIG. 13B

FIG. 13C

FIG. 13D

FIG. 13E

FIG. 13F

# F I G. 14

# F I G. 15